# EUROPEAN PATENT APPLICATION

(11) **EP 1 914 636 A1**
(43) Date of publication of application: **23.04.2008**
(21) Application number: 05851084.3
(22) Date of filing: 27.07.2005
(51) Int. Cl.: G06F 15/16

(54) **CLIENT-SERVER INFORMATION SYSTEM AND METHOD FOR PRESENTATION OF A GRAPHICAL USER'S INTERFACE**

(71) Applicant: Belyaev, Mikhail Vasilyevich, Novosibirsk, 630090 (RU); Gaman, Vadim Anatolievich, Moscow 109153 (RU); Storozhuk, Igor Konstantinovich, Moskovskaya obl., 140007 (RU); Kononenko, Tatiana Ivanovna, Moscow 103055 (RU); Dubitskaya, Liudmila Fedorovna, Moscow 125373 (RU)
(72) Inventor: Belyaev, Mikhail Vasilyevich, Novosibirsk, 630090 (RU); Gaman, Vadim Anatolievich, Moscow 109153 (RU); Storozhuk, Igor Konstantinovich, Moskovskaya obl., 140007 (RU); Kononenko, Tatiana Ivanovna, Moscow 103055 (RU); Dubitskaya, Liudmila Fedorovna, Moscow 125373 (RU)
(74) Representative: Valea AB
(86) International application number: PCT/RU2005/000394
(87) International publication number: WO 2007/001206

(57) **Abstract**

Described is an information system consisting of a server computer and one or more client computers connected with the server by a communication channel, wherein a data modification and retrieval operation being executed by the server computer, and the client computers executing the requests to the server for the data modification and retrieval and representing the advanced graphical user interface, **characterized in** using, at each client computer, an extendable universal system of dynamically created self-sufficient objects. Also a method is proposed for providing an advanced, dynamically created graphical user interface at a client computer in a client-server information system, **characterized in** using a developed system of self-sufficient objects operated according to a certain algorithm, i.e., a program object system functioning without using event handlers.

## Description

### Field of the Invention

The invention relates to the data transmission in computer networks and could be used in distributed information systems.

### Conventional Terms

*Information client-server system* means a distributed information system consisting of a server computer (the back computer) and one or more client computers (the front computers), in this system each client being coupled with the server by a communication channel. At the present time, the Internet environment is the most often used as the communication channels. The main function of the client-server system is performed by the server computer. A user of the information system interacts with the client computer.

*Request* means a signal sequence sent via a communication channel from the client computer to a server computer. The request signals define what operations must be performed by the server, as well as the nature of the data expected by the client from the server.

*Response* means a signal sequence sent via a communication channel from the server computer to the client computer. The response comprises data for the client.

*Program object* means a signal ensemble organized in a certain manner in a computer memory. Program objects are created and used during computer operation in accordance with the algorithms of the object-oriented programming. Each program object possesses a specific set of the object methods (functions and/or procedures) and is characterized by a set of object property values. The program objects interact with each other, calling the each other's methods. Usually, the interaction takes place by means of the event handlers.

*Object method* means a signal ensemble organized in a certain manner in a computer memory. Calling (executing) the method brings these signals into an action. The method can return data being a result of performing the method.

*Object property* means an object characteristic containing the data of one of the predetermined types. Recording and reading the property are carried out through calling the corresponding object methods.

*Events* means the user's actions or any other changes in the computer system.

*Program object configuration* means particular value set of properties of this obj ect.

*Program object description* means data containing a program object configuration. Various binary or text formats can be used for program object descriptions.

*Program object description version* means additional data related to a program object description, permitting to distinguish variants of object configurations.

(Program) *Interface* means a certain set of methods and properties. In order to support a program interface, an object must possess all methods and properties related to this interface.

*Object behavior* means object response to events in the system, depending on the object configuration. Program objects possess initially some behavior, i.e., predetermined response to events in the system depending on the object configuration.

*Event handler* means a signal ensemble organized in a certain manner in a computer memory, which ensemble being executed in response to occurrence of particular event in the computer system. Event handlers define, in a great measure, the program object behavior. They modify the initial behavior of objects; they are the means of individualizing this behavior and provide usually the interactions between the objects.

*Script* means a text containing a program in one of the programming languages and embedded into a web page or other document. Event handlers can be implemented by interpreting dynamically the script text into a signal ensemble of corresponding event handlers.

*Web application* means an information client-server system using a web browser as a client program. A behavior of program objects of the web application client portion is assigned using the scripts introduced into web pages.

*Thin client architecture* means in accordance with this concept, a client program (the so-called "thin client") reflects only the user interface elements, and all user interface events are processed at a server. It create an additional (besides usual requests and responses in the client-server system) communication traffic.

*Caching* means storing the web pages and other documents at a machine readable medium (hard drive) of client computer for the purpose of their reusing, and thus decreasing communication traffic. In the web applications, the caching mechanism of the web browser has usually to be switched off, since it can prevent for updating (can lead to misuse of stale stored data).

*Hashing* means a variation of encryption without possibility for decryption (one-way encryption).

*User authentication* means a procedure executed while connecting a user to the system, when the user certifies his/her user rights by means of the conventional name and password.

*User authorization* means a procedure for confirming a user authority during the information system operation.

### Terms entered by the Author of the Invention

*Self-sufficient object* means a program object not requiring any event handlers for its operation. Self-sufficient program objects are capable of functioning adequately only as a part of a certain system.

*System of self-sufficient objects* means a system of program objects organized in a certain manner, where interrelations between these objects are solely defined by their configuration. Interrelations between the self-sufficient objects established in a certain manner allow the system to function adequately without using the event handlers in any form, including the possibility to function without use of scripts. Below a mechanism is described providing operation of the system of self-sufficient object.

### Background of the Invention

At the present time, information client-server systems are widely used. A person, being a user of the information client-server system, interacts directly with the client computer. In response to the user's actions (e.g., pressing the keys or clicking the mouse), the client computer operating under the control of the client program sends request signals to the server computer via a communication channel. The client program provides a user interface at the client computer and converts the user's actions into the signals of request to the server.

The server computer operates under the control of the server program. Upon receiving the request signals, the server, according to the request, performs some conversions of the data stored at the machine-readable media, derives a data sample from the same or other machine-readable media, and sends these data in the form of respective signals to the client computer via the communication channel. Upon receiving the response signals, the client computer provides the data received form the server to the user in the form convenient for him/her and, if necessary, records a part or all received data onto a machine-readable medium of the client computer. The request-signal and the response-signal exchange in the system lasts as long as is necessary for the user in order for solving a particular problem. Besides the computer, the client role could be performed by a mobile telephone or other communication device operating under the control of the client program.

Thus, in order for an information client-server system functioning, two programs, server program and client program, are necessary. Usually, the server program has an access to information resources in the form of databases and carries out the main activity in the client-server system. The client program carries out a small part of the work, providing a user interface and performing requests to the server.

In many information systems, program Web browsers such as Microsoft® Internet Explorer, Mozilla or Opera are used as a client program, i.e., these information systems are Web applications. As opposed to Web sites providing to a user a predetermined set of Web pages, the Web application operates interactively and provides Web pages created dynamically in accordance with the user request. A strong point of the Web applications consists in the fact that the universal program (web browser) is used as a client in all Web applications. The Web browser is installed once at a client computer, often when installing an operating system. Then it could be used as the client program in most various Web applications. This excludes a necessity for installing customized client programs for every separate Web application. In the Web application, logic of information system operation and a method for providing a client with the information is defined entirely by the server side. Therefore, changes in these logic and methods for providing information require fairly often no changes in the client program.

However, the possibilities of the Web applications are limited because of rather poor possibilities of the user interface provided by the Web browser. Recently, attempts have been taken for improving a user interface of Web applications based on the XForms specifications [XForms 1.0 (W3C Recommendation) http://www.w3.org/TR/xforms/] and WebForms 2.0 [WebForms 2.0 (Working Draft) http://whatwg.org/specs/web-forms/current-work/]. Nevertheless, new specifications do not permit to overcome the gap separating a user interface of Web applications from the improved graphical user interface provided by the systems such as Windows, MacOS, XWindow, Java, etc. Therefore, in the cases when a distributed information system needs an advanced graphical user interface, the developers are forced to create the customized client programs that are native for the given client platform, i.e., the programs based on the application programming interfaces of the specific client program. In this case, every information system requires its own client program; every change in the logic of information system operation or methods for providing a user with the information requires updating the client program (reinstalling thereof at the client computer). Sending and reinstalling new versions of the client program results in an additional communication traffic, creates the significant inconveniences for users, and leads to the additional financial expenses.

The purpose of this invention is providing a technology (system and method) for developing information client-server systems with advanced graphical user interface, wherein the business logic and methods for representing information are entirely at the server side, and the client part is represented by a universal program requiring no reinstallation for every separate application. Herewith, an operation of the graphical user interface, i.e., an adequate interaction of the user interface objects both with a user and between each other must occur exclusively at the client computer without accessing the server. The technical result of the invention consists in excluding the additional communication traffic created by sending the establishing packets and updated versions of the client programs.

Known are the methods for providing an advanced graphical user interface of the Web application by means of embedding into the Web pages the components of the ActiveX or Java applets [Internet and World Wide Web. How to Program, 3rd Edition. By Harvey M. Deitel, Paul J. Deitel, Andrew B. Goldberg. Published Nov 24, 2003 by Prentice Hall. 1296 pages]. However, these methods do not achieve our purpose, since existing embedded components are not universal (customized components are required for every Web application) and require for updating the logic of the information system operation or changing the method for representing an information. The same is valid for the new Java technology Web Start [Java Web Start Technology, http://java.sun.com/products/ javawestart/] that is intended for improving the Java applets.

Known are the embodiments of the information client-server system in the thin client architecture [US 2002/0130900; US 2003/0135825]. According to these US patent applications, objects of the user interface are created dynamically by descriptions in the Extensible Markup Language (XML) obtained from the server. This allows decreasing communication traffic due to the universal character of the client program. However, additional communication traffic because of processing the client events at the server brings this advantage to naught.

The closest analogue of the present invention is [WO 2004/019160]. This application proposes to create dynamically the program objects of the user interface at the client computer on the basis of descriptions obtained from the server in any of the markup languages (XML, XSL, DHTML, XHTML, HTML). Individualization of the behavior of the program objects of the user interface is achieved using the scripts in the JavaScript language. It is believed that such systems can possess the extendibility property, i.e., new type objects can be added into the system as necessary. However, for functioning the script, it is usually necessary to assign an object model, a set of the predetermined object types (classes, in term of the object-oriented programming), which contradicts the extendibility principle. These proposals have not yet gained wide spread occurrence just because of the above said contradiction and the complexity of implementing the universal mechanism of the script support.

### Summary of the Invention

The set task is solved in the invention by means of using at the client side a universal system of dynamically created self-sufficient program objects and managing the information client-server system in accordance with a certain algorithm. In the present invention, as well as in the [US 2002/0130900, US 2003/0135825 and WO 2004/019160], the program objects at the client computer are created dynamically by descriptions thereof obtained from the server, but in the present invention the objects of the user interface are not embedded into a Web browser and operate as a part of the universal client program. The present invention, in contrast to the [US 2002/0130900 and US 2003/0135825], does not require the step of accessing the server for the user interface operation. In contrast to the [WO 2004/019160], the present invention does not require the step of supporting the script mechanism for the system operation. The usage of the system of the self-sufficient program objects in the present invention excludes the complexities for implementing the universal mechanism of the script support. A format being used for describing the self-sufficient objects is of no principal importance for performing the present invention.

As opposed to the commonly used program objects which behavior is significantly defined by the event handlers, the behavior of the self-sufficient program object is defined entirely by specifying the configuration thereof, i.e., by a value set of properties of this object. An event response of the self-sufficient program object in the system depends on the object configuration, but at each specific configuration, this response is predetermined and cannot be modified using the event handlers.

How could be ensured an adequate interaction between the very different objects, if the modification of their behavior is not supposed? For that end, the objects at the client side in the invention are clustered into a system of the self-sufficient program objects, which system operation takes into account the unified character of the object interactions within the framework of the client-server system.

### Brief Descriptions of Drawings

Fig. 1 illustrates the operation of the self-sufficient object system in the case of requiring a data modification and receipt.
Fig. 2 represents the flow-chart in the case of requiring a data modification and receipt.
Fig. 3 illustrates the operation of the system of self-sufficient objects in the case of requiring a new container. The caching mechanism is not shown in this diagram for the sake of simplicity.
Fig. 4 represents the flow chart in the case of requiring a new container without the caching mechanism.
Fig. 5 illustrates the caching mechanism in the case of requiring a new container.
Fig. 6 represents the flow chart of the caching mechanism in the case of requiring a new container.
Fig. 7 illustrates an example of the window form intended for conducting payments by means of the credit cards.
Fig. 8 represents the flow chart in the case of conducting payments by means of the credit cards.
Fig. 9 represents the flow-chart in the case of the complete or the sample encryption of the requirement.
Fig. 10 represents the flow-chart in the case of the complete or the sample decryption of the response.
Fig. 11 represents the flow-chart of running the universal client program.

### Implementation of the Invention

All self-sufficient objects in the system are divisible into several categories. Object belonging to one or another category defines its role and behavior in the system. The following categories of objects are specified in the system of the self-sufficient objects:
*Containers* are intended for uniting the self-sufficient objects into the groups. These objects are represented in the user interface as the window forms and various grouping panels. The destination of the container object is supposed to have an access to all self-sufficient objects that are united by this container, in order for transmitting to them the data obtained from the server, or for receiving from them the data for forming a request to the server. The container description includes the descriptions of all the objects pertained thereto including other containers. Any self-sufficient object (except for the window forms) is included into some container. The Window forms exist independently, as being the containers of the top level.

*Initiators* are the buttons, the menu items, and other objects capable for initiating a request to the server based on the user actions (the key presses or the mouse clicks).

*Recipients* are the labels, text input control, the lists, the grids, the diagrams, and other objects capable for receiving and, possibly, displaying the data received from the server.

*Requesters* are the single-line text input controls, the text areas, the lists, the grids, and other objects capable for providing the data contained therein for forming a server request.

*Decorations* are the pictures and other graphical design elements not capable for interacting with a user. The decorations do not impact the information system operation, their presence or their absence defines solely a layout of the windows forms.

*Brokers* are special self-sufficient objects being a link between the objects of the other categories.

Some self-sufficient objects could fall into several categories at once, for example, being simultaneously requesters and recipients.

Belonging to some category requires the availability of attributes obligatory for this category, i.e., a support of the corresponding interface.

Let us list the minimal set of the interface methods and the properties of indicated categories of the self-sufficient objects.

In the Initiator interface:
the Broker property defines just what the broker would be initiated using this initiator.

In the Broker interface:
the Container property defines a container that would participate in forming a request;
the RequestType property defines a request type. The minimal sufficient set for the system operation includes the following types of requests: a new container request; a data request for the existing container; a request modifying the data at the server with receiving subsequently some data from the server; a request modifying the data at the server without receiving subsequently any data from the server; several request variants for authenticating users;
the ContainerName property defines just what container is required (if a new container is requested), or for what container the data is requested;
the ServerAddress property comprises the network address of a server implementing the information system;
the Go method brings a broker into action.

In the Requester interface:
the ReceiveRequest method returns a request portion corresponding with the given requester.

In the Recipient interface:
the SetData method transmits respective data to a specific recipient. In the Container interface:
   the FormRequest method returns a complete request to a server. When calling this method, the container searches all objects related thereto and calls the ReceiveRequest method for every requester, thus forming a complete request from the received portions;
   the DistributeData method searches all objects-recipients relating to a container, calls the SetData method for each object, and thus transmits respective data to every specific recipient.

The Decoration interface is not required.

All the self-sufficient objects must have the Name property the value of which identifies them.

When new containers are requested, one can use a special caching mechanism that provides an additional decrease of the communication traffic. The listed set of methods and properties does not include the properties that are necessary for protecting the data by means of the complete or the selective encryption of requests and responses and storing cached descriptions of the objects in the encrypted form (see below).

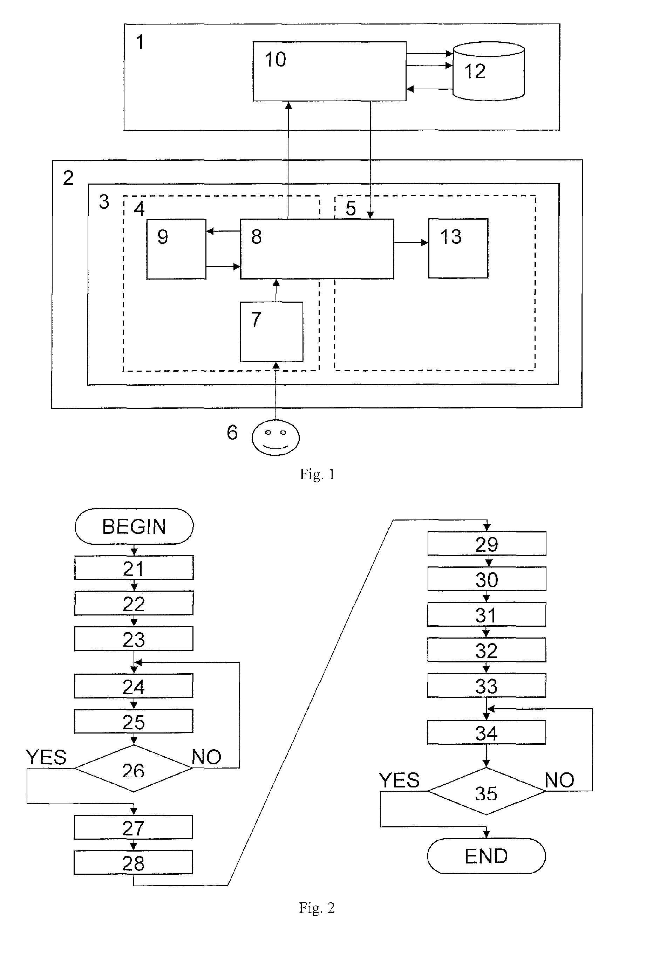

Let us trace in Fig. 1 the client and the server interaction in the case of request for modifying and receiving the data (the block diagram of Fig. 2).

Legends: 1 - server, 2 - client, 3 - client program, 4 - request forming stage, 5 - response processing stage.

### Sequence of operations:

The user 6 brings the Initiator 7 into action (button, menu item, etc.) (block 21).

The Initiator 7 calls the Go method for the Broker 8 (block 22).

The Broker 8 calls the FormRequest method for the Container 9 (block 23).

The Container 9 interrogates the self-sufficient objects-requesters related thereto (loop, blocks 24 to 26) by calling the ReceiveRequest method for each of them (block 24), then forms a request from the portions corresponding with the requesters (block 25), and returns the formed request to the Broker 8 (block 27). (The block 26 checks the condition, whether all requesters have been processed).

The Broker 8 sends the request to the Server Program 10 at the ServerAddress (block 28).

The Server Program 10 modifies the data in the Database 12 (block 29), requests and receives data from the Database 12 (block 30).

The Server Program 10 transforms the data to a necessary format (block 31) and sends them to the Broker 8 (block 32).

The Broker 8 transmits the received data to the already existed Container 13 by calling the DistributeData method (the Container 13 can be the same as the initial Container 9) (block 33).

The Container 13 distributes the received data between the self-sufficient objects-recipients related thereto (loop, blocks 34 to 35) by calling the SetData method for every recipient (block 34). (The block 35 checks the condition, whether all recipients have been processed).

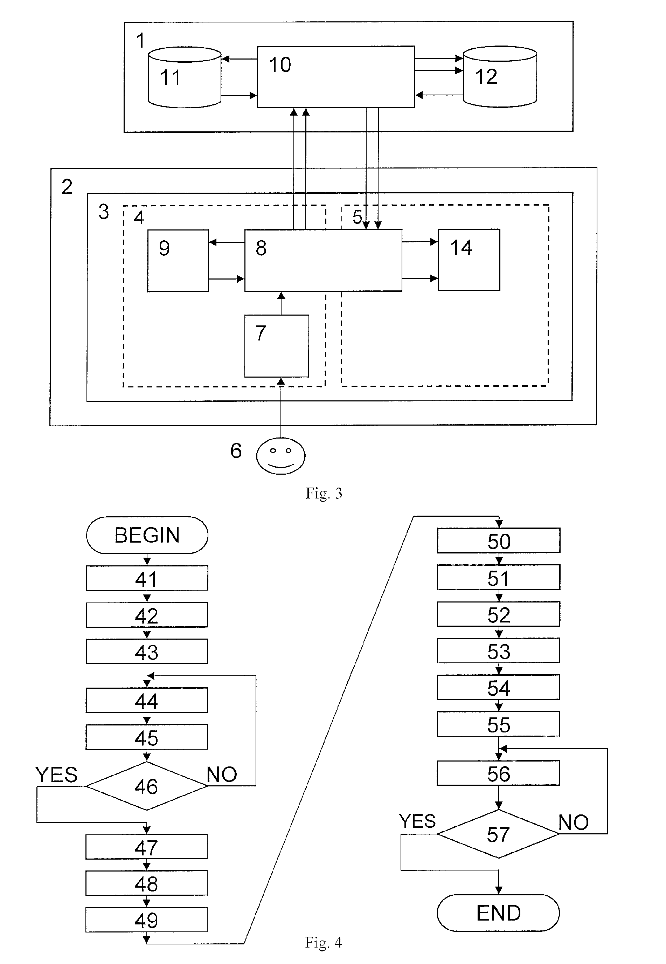

Let us trace in Fig. 3 the client and the server interaction in the case of requesting a new container (without caching) (the block diagram of Fig. 4).

The sequence of operations:
The user 6 brings the Initiator 7 into action (by the button, the menu item, etc.) (block 41).

The Initiator 7 calls the Go method for the Broker 8 (block 42).

The Broker 8 calls the FormRequest method for the Container 9 (block 43).

The Container 9 interrogates the self-sufficient objects-requesters related thereto (loop, blocks 44 to 46) by calling the ReceiveRequest method for each of them (block 44), then forms a request from the portions corresponding with the requesters (block 45), and returns the formed request to the Broker 8 (block 47). (The block 46 checks the condition, whether all requesters have been processed).

The Broker 8 sends the request to the Server Program 10 at the ServerAddress (block 48).

The Server Program 10 finds and reads the new container description situated at the Server Machine-Readable Medium 11 (block 49).

The Server Program 10 sends the new container description to the Broker 8 (block 50).

The Broker 8 creates the New Container 14 in accordance with the received description (block 51).

The Broker 8 sends the second request to the server, now for receiving data for the New Container 14 (block 52).

The Server Program 10 requests and receives data from the Database 12 (block 53).

The Server Program 10 reduces data to a necessary format and sends them to the Broker 8 (block 54).

The Broker 8 transmits the received data to the already existed New Container 14 by calling the DistributeData method (block 55).

The Container 14 distributes the received data between the self-sufficient objects-recipients related thereto (loop, blocks 56 to 57) by calling the SetData method for every recipient (block 56). (The block 57 checks the condition, whether all recipients have been processed).

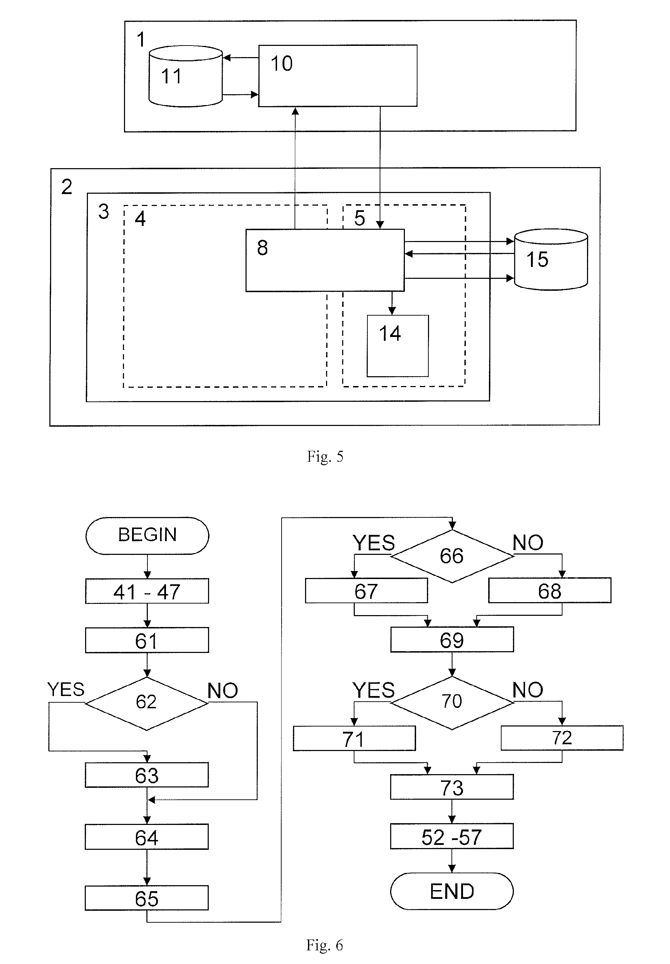

Let us trace in Fig. 5 the caching mechanism functioning when requesting a new container (the block diagram of Fig. 6).

In the beginning, the operations are performed in accordance with Fig. 3 (blocks 41 to 47 of Fig. 4) up to receiving the formed request by the Broker 8 from the Container 9. Further, the following operations are performed:
The Broker 8 searches the description of the new container and the version of this description at the Client Machine-Readable Medium 15 (block 61). If the description and its version are present at the client computer (block 62), the Broker 8 includes the description version into the request (block 63).

The Broker 8 sends the request to the Server Program 10 at the ServerAddress (block 64).

The Server Program 10 finds and reads the new container description and the description version situated at the Server Machine-Readable Medium 11 (block 65).

The Server Program 10 compares the description versions from the client 15 and the server 11 of the machine-readable media (block 66). If the description versions do not distinguish, then the Server Program includes a respective flag into the response (block 67). In this case, the description and its version are not sent to the client computer. If the versions distinguish, or the description version is absent in the request, then the Server Program includes the description and its version into the response (block 68).

The Server Program 10 sends the response to the Broker 8 (block 69).

The Broker 8 analyses the response. If the flag of the version coincidence is absent (block 70), then the Broker stores the received description and its version at the Client Machine-Readable Medium 15, replacing, if necessary, the existing description and its version (block 71). Otherwise, the description already existed is used (block 72).

The Broker 8 creates the New Container 14 in accordance with the existed description (perhaps, just received) (block 73).

Further, the operations are performed in accordance with Fig. 3 for receiving the data for the new container (blocks 52 to 57 of Fig. 4).

If no changes occur by the next operation session in the information system operation logic or the data representation method, the container descriptions will be read from the client machine-readable medium. Only the versions of the container descriptions and the flag that the descriptions have not been changed will be sent via the communication channels. As the need arises for amending the information system operation logic or the data representation method, it is sufficient, besides amendments in the server program operation, to amend the descriptions of respective containers stored at the server machine-readable medium and to alter the versions of these descriptions. In this case, the descriptions of respective containers stored at the server machine-readable medium will be updated in the next operation session. Thus, the caching mechanism permits, on one hand, to update promptly the information system operation logic or the data representation methods, and reduces, on another hand, the communication traffic by means of updating the description of each container only if it is necessary.

The possibility and necessity for applying the caching mechanism to the container descriptions comes from the fact that these descriptions can remain invariant during many operation sessions. For the data coming from the server into the self-containing objects-recipients, the caching is not applied, since these data can vary even during one operation session.

As stated above, it is usually necessary to switch off the caching mechanism existing in the web-browsers for the right operation of the web applications. This is associated with the fact that the HTTP protocol and the HTML markup language used in web applications do not permit for distinguishing the data varying frequently from the data varying rarely. Therefore, the caching mechanism of the web browser could impede for updating the data and result in a wrong use of the stale stored data. Switching off the caching mechanism in the web applications results in complete reload of the web pages in every request. This forms additional (significant and groundless) communication traffic in the web application operation.

Fig. 1 to 6 illustrates interactions within the self-sufficient objects. We have considered two types of requests. Algorithms for performing the requests of other types have no fundamental distinctions from the considered algorithms. The system operation uses the "request-response" mode to the full extent, which is typical for any client-server system. The system operation just in this mode permits to formulate the universal operation sequences. It is important to note that the considered operation sequences can be performed without engaging any event handlers including those based on scripts.

For successful participation in executing the request and receiving the response, it is sufficient to configure correctly the system of the self-sufficient objects, i.e., to set correctly the value of their properties. Particularly, in the case of the request in Fig. 1, a series of properties must be set correctly in the objects:
in the Initiator 7, the Broker property must point at the Broker 8 participating in the request;
in the Broker 8, the Container property must point at the Container 9 forming the request; the RequestType property must correspond with the request type; the ContainerName property must correspond with the name of the Container 14 for which the data are requested; the ServerAddress property must contain respective data;
the Container 9 must include all objects necessary for forming the request with the correctly set configurations.

All the data necessary for configuring can be contained in the description of the Container 9 (in this case, both the Initiator 7 and the Broker 8 are contained in the Container 9). Configuring the objects is performed by the broker created thereof just after their creating on the basis of the description of the container containing thereof.

In order for participating in the system, it is necessary and sufficient for the self-sufficient object to support the interface corresponding with the category of this object. Under this circumstance, the proposed system can be easily appended by new self-sufficient objects, i.e., the system is extensible. The self-sufficient objects supplementing the system can be placed in the files of dynamic link libraries at the machine-readable medium of the client computer. After recording the dynamic link library at the machine-readable medium of the client computer, the self-sufficient objects contained in that library can be used in a variety of information systems. Thus, the extension of the self-sufficient object system requires only a single transmission of small dynamic link libraries via communication channels.

Let us now consider the interaction of the self-sufficient object system with a user. The techniques of this interaction, as well as the techniques of their interaction within the system, are defined completely by the configuration of these self-sufficient objects. The self-sufficient objects are perceived by the information system user as the elements of the graphic user interface. In their substance, they must provide an advanced graphical user interface typical for the client platforms such as Windows, MacOS, XWindow or Java. Therefore, they are created on the basis of the application programming interfaces of a specific client platform. The adequate behavior of the user interface objects assumes:
set of the information input restrictions that must correspond with the current use case of the object;
warning the user on his/her inadequate actions;
checking the mutual consistency of the objects.

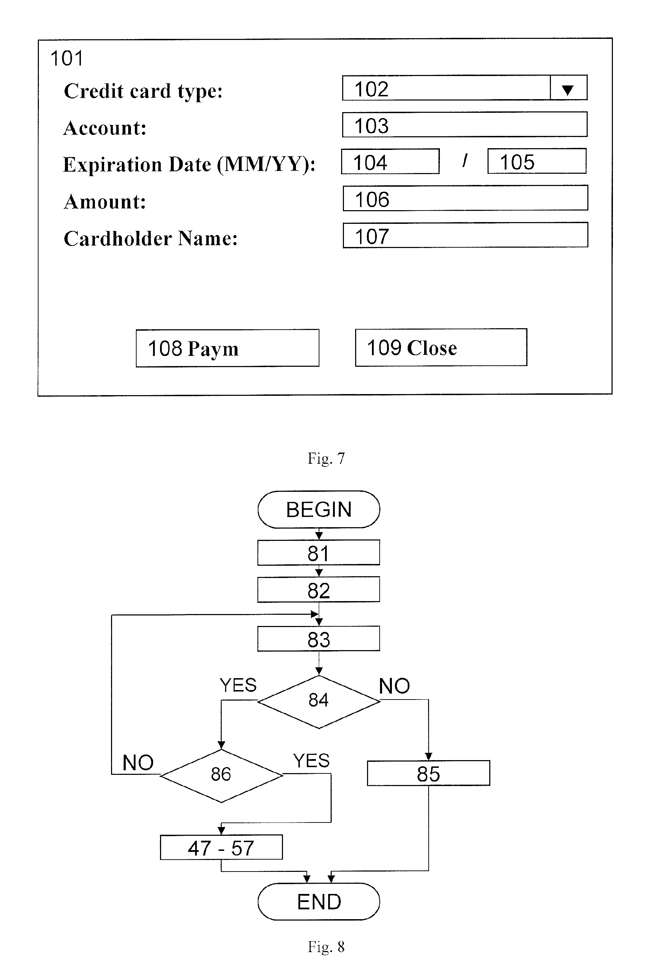

Let us show how all these functions can be implemented without using the event handlers, solely by adjusting the self-sufficient object configuration. Let us consider the example: Fig 7 shows schematically the window form 101 designed for carrying out payments by credit cards (for the sake of simplicity, not all necessary fields being depicted). The drop-down list 102 is the specialized object comprising the list of supported credit cards, for example, VISA, American Express, etc. The input fields 103 to 107 are designed for inputting respective alpha-numeric data: 103 for the credit card account, 104 and 105 for the month and year of the credit card expiration date, 106 for the payment amount, and 107 for the cardholder name. The objects 102 to 107 are the requesters. The buttons 108 and 109 initiate the operations for transmitting the request to the server and for closing the window form, respectively. Fig. 7 does not show the broker being presented in the container 101 but invisible for the user. The Container property of the broker must point to the window form 101. The Broker property of the button 108 must point to the existing broker.

Let us show how the information input restrictions can be implemented. The restrictions for the input fields can be associated with the ContentType and MaxLength properties. The MaxLength property defines the maximum possible number of the input symbols. The ContentType property defines what symbols can be input into the input control. So, for the input fields 103 to 105, the ContentType property must be set to the Integer value. This type of the content allows the input of digital symbols only. For the input field 106, the ContentType property must be set to the Monetary value. This type of the content allows the input of the digital symbols and the decimal fraction symbol (point or comma depending on the regional adjustments) only. Other input fields are adjusted similarly. During the symbol input process, the object (input fields) checks the correspondence of the symbols being input with the ContentType property value and ignores the inadmissible symbols. It is important that the input check is performed by the object itself rather than an event handler being external relative to the object.

Let us show how the warnings of the user on his/her inadequate actions can be implemented (block diagram of Fig. 8). In the case under consideration, the typical inadequate actions of the user are not filling the input field and are not selecting the type of the credit card. When user presses the button 108, the operations are performed in the following order:
The Button 108 brings the broker into action (calls the Go method for the broker) (block 81).

The Broker calls the FormRequest method for the Container 101 (which is pointed out by the Container property) (block 82).

The Container 101 searches the self-sufficient objects, requesters 102 to 107 related thereto (loop, blocks 83 to 86), calling for each of them the ReceiveRequest method (block 83). (The block 86 checks, whether all the requesters have been processed).

When calling the ReceiveRequest method for the drop-down list 102, the user action adequacy check takes place (block 84). In this case, the check is being performed whether the user has selected the credit card type. If the user has not selected the credit card type, which is the inadequate action, the program operation is interrupted, and the drop-down list opens the message box (block 85) with the text "The credit card type has not been selected" for the user.

When calling the ReceiveRequest method for each of the input fields 103 to 107, each field checks itself the user action adequacy (block 84). For the input fields this means the check whether this field has been filled. If the user has not filled the control 103, which is the inadequate action, the program operation is interrupted, and the input field 103 opens the message box (block 85) with the text "The field 'Credit card number' has not been filled" for the user. (The text 'Credit card number' must be contained in the FieldName property of the input control 103.)

If all the fields have been filled, then the operations for receiving the new container, window form with the results of carrying out the payment are performed (blocks 47 to 57).

In every program operation stop the user must perform the necessary corrections and press the button 108 again. It is important that the control of the inadequate user's actions and the report on this is performed by the object itself rather than an event handler being external relative to the object.

Let us show how the mutually agreed behavior of the self-sufficient objects can be implemented. In the example under consideration (Fig. 7), a number of digits in the credit card number (the input control 103) depend on the credit card type selected in the drop-down list 102. So, for example, the number of the VISA credit card can be composed of 13 or 16 digits, the number of the American Express credit card consists of 15 digits, the number of the Dinners Club credit card consists of 14 digits, and so on. Moreover, the correct numbers of the credit cards comply with the rules specific for each particular type of the card. Therefore, just the objects 102 and 103 must operate consistently. In order for solving this problem, the input field for the credit card number must possess the CreditCardList property pointing to the list 102. In this case, during the input, the permissible amount of the input digits can be made consistent with the credit card type selected in the list 102, and, in the case of calling the ReceiveRequest method for the control 103, it is possible to carry out the check of whether the input number complies with the credit card type in accordance with the respective algorithm. In the case, when the input number does not comply with the credit card type, the user can be warned with the respective message. It is important that this operation is performed by the object itself rather than by the event handler.

Thus, we have shown how the adequate behavior of the user interface objects can be provided without using the event handlers.

The above discussed operation sequences form essentially the basis for the original operation protocol of the information client-server system, which can be formulated after a certain formal characterization. This protocol can be executed over the known network protocols such as TCP/IP, HTTP, HTTPS, SOAP [Internet and World Wide Web. How to Program, 3rd Edition. By Harvey M. Deitel, Paul J. Deitel, Andrew B. Goldberg. Published Nov 24, 2003 by Prentice Hall. 1296 pages] and others, for example, the protocols for data transfer in the mobile networks. Choosing of the basic network protocol does not fundamental meaning and affects only the implementation features. Choosing of the higher-level protocol (for example, HTTP in comparison with TCP/IP, or SOAP in comparison with HTTP) permits to simplify the implementation process. On the contrary, choosing of the low-level protocol permits to make the transmitted data packets more compact and to decrease the amount of data transferred via communication channels.

Let us briefly consider the problems related to the user authentication and authorization. We will distinguish three levels of the authentication:
The simplest case, when the information system gives free access for everyone and the authentication is not required, relates to the zero level. In this case, the login request does not content any user's data.

If the client and the server communication is carried out via a security connection (for example, the HTTPS protocol [3] has been selected as the basic), then the user's name and password can be transmitted via the communication channels to the server directly in the authentication request. In this case, one request is sufficient for the authentication (the first level).

If an insecurity connection is used, then it is impossible to transmit the password via the communication channel in an open or even in a cached form. In this case, the authentication will require performing two requests (the second level) and can be made in two steps, like the digest authentication or by the Kerberos protocol [Hacking Exposed Web Applications. By Joel Scambray, Mile Shema, Caleb Sima, Publisher: McGraw-Hill Osborne Media; 1 edition (June 19, 2002)].

In any case, the successful authentication means assigning a unique session identifier to the user. At the zero authentication level, the session identifier is assigned to the user without checking the name and password. During further operation of the information system, the session identifier can be included into all the requests for receiving data and containers, thus the user authentication is performed in each request.

If a protocol without data encryption, for example, TCP/IP or HTTP is used as the basic network protocol, and then the data protection, in the form of complete or selective encryption of the requests and responses, can be embedded directly into the system in question. This requires that the Requester, Recipient and Container interfaces include the following properties:
In the Requester interface:
   the EncryptRequest property-flag is set, if the request portion corresponding to this requester should be encrypted.
In the Recipient interface:
   the DecryptResponse property-flag is set, if the response portion corresponding to this recipient should be decrypted.
In the Container interface:
   the EncryptCompleteRequest property-flag is set, if the complete request should be encrypted;
   the DecryptCompleteResponse property-flag is set, if the complete response should be decrypted.

The encryption algorithms can be implemented in the form of the dynamic link libraries. Different algorithms can be used for the complete and/or partial request encryption and response decryption. Thus, up to 4 different algorithms can be used simultaneously.

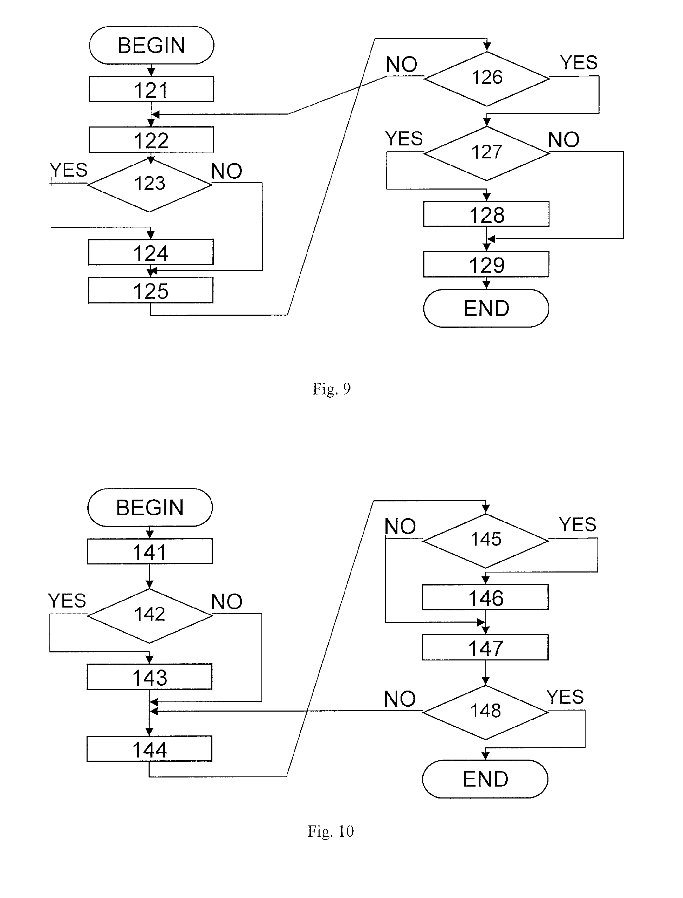

Let us show how the complete and/or the partial encryption can be made while forming the request (block diagram of Fig. 9). When calling the FormRequest method (block 121), the container interrogates the self-sufficient objects, requesters related thereto (loop, blocks 122 to 126) by calling for each of them the ReceiveRequest method (block 122). If the EncryptRequest property is being set in the requester (block 123), the container encrypts this request portion (block 124) using the dynamic link library and includes this library into the complete request (block 125) in the encrypted form. The block 126 checks whether all the requesters have been processed. If the EncryptCompleteRequest property is set in the container (block 127) then the formed request is encrypted (block 128) before sending to the server (block 129).

Let us show how the complete and/or the partial decryption can be made in receiving the response from the server (block diagram of Fig. 10). When calling the DistributeData method (block 141), if the DecryptCompleteResponse property is set in the container (block 142), then the container decrypts the response received from the server (block 143) using the dynamic link library. The container distributes the received data between the self-sufficient objects, the recipients related thereto (the loop, the blocks 144 to 148) by calling the SetData method for each recipient (block 144). If the DecryptResponse property is set in the specific recipient (block 145), the container decrypts the data intended for this recipient (block 146) using the dynamic link library before calling the SetData method (block 147). The block 148 checks whether all the recipients have been processed.

The encryption keys can be received from the server when authenticating the user according to the Kerberos protocol [Hacking Exposed Web Applications. By Joel Scambray, Mile Shema, Caleb Sima, Publisher: McGraw-Hill Osborne Media; 1 edition (June 19, 2002)]. These keys operate during one operation session.

The encryption of the data comprising the container descriptions can be organized similarly. In this case, the container descriptions must be transmitted via a communication channel and stored at the client machine-readable medium in the encrypted form. The responsibility for decrypting the descriptions can be imposed at the broker. The necessity of the decryption can be indicated by setting the DecryptContainerDescription property of the broker. The session key cannot be used for decrypting the container description, since this description could be read from the client machine-readable medium many times during several operation sessions. The user password can be used as the key for decrypting the container description either directly or in the hashing form.

Consider the operation of the client computer under the control of the universal client program based on the system of the self-sufficient program objects.

The universal client program must include a rich set of the self-sufficient objects, such that can satisfy the requirements of the majority of the businesslike information systems. Including the object into the system means that the objects of such a type can be created and configured about their descriptions. Those few information systems, for which the standard set of the self-sufficient objects is insufficient, could be replenished by additional objects contained in the dynamic link libraries.

In order for beginning the operation of the specific application, the client program is sufficient to have the following data:
the network address of the application server;
the user authentication method practicing in the given application;
the name of the first container, i.e., the container requested just after the user authentication;
the list of the dynamic link libraries having the self-sufficient objects complementing the system (if necessary);
the list of the dynamic link libraries that contain the program code for the complete or partial encryption of the requests and responses (if necessary).

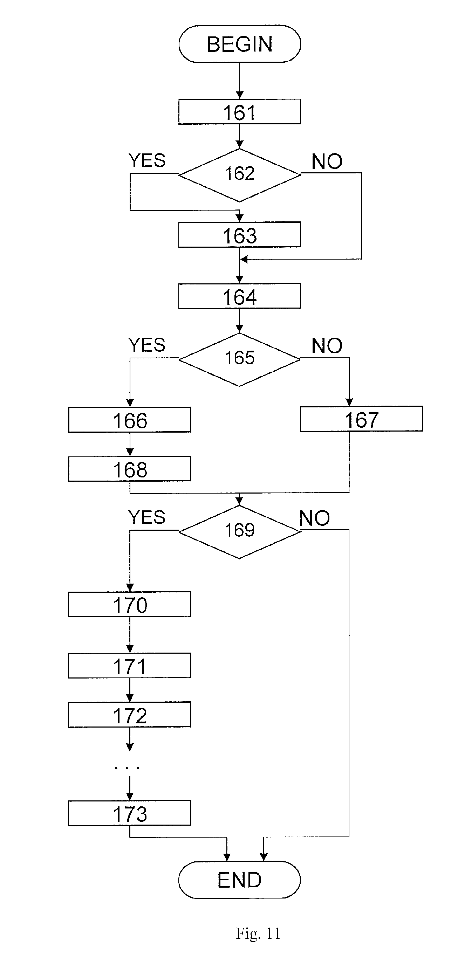

These data can be stored in the initialization file of the application at the client machine-readable medium. Consider the operation sequence in the beginning of the operation session of the client computer under the control of the universal client program (block diagram of Fig. 11):
the data on the application server address, the authentication method, the name of the first requested container, and the file names of the dynamic link libraries are read out from the initialization file at the machine-readable medium of the client computer (block 161);
if the list of the file names of dynamic link libraries is not empty (block 162), then the dynamic link libraries having the additional self-sufficient objects and the libraries having the encryption algorithm implementations are loaded (block 163);
in order for executing the authentication requests, the broker-object is created and configured (block 164);
if the user's authentication method requires for inputting the user's name and password (the first and second levels) (block 165), then the special window form containing the fields for inputting the name and password and the system entering button is created and then displayed on the monitor screen (block 166);
if the zero level authentication is used, then the request for entering the system is performed without any user's actions (block 167);
if the first or second level authentication is used, then the authentication is performed after inputting the name and password and pressing the system entering button by the user using one or two requests, respectively, (block 168);
in the case of successful authentication (block 169), the existing broker requests, according with the known name, the first container being created (first window form) (block 170);
the broker creates and configures the first window name according with the received description (block 171);
the further operation of the information system follows the way that is defined by the content of the first window form. In this form, the brokers requesting the other window forms must be present. Thus, the logic of the further operation of the information system is defined entirely by the server (particularly, through the description of the first window form received from the server) (block 172);
the user's manipulation with the information system is terminated after closing the first window form by the user (block 173).

Thus, we have shown how the client computer under the control of the universal client program based on the system of the self-sufficient program objects could perform the operation which logic is defined entirely by the server. Because the client program is universal, it can control the client computer operation in various information systems, with providing the advanced graphical user interface. It is not necessary to reset the client program for operating in other information systems, as well as when changing the operation logic and the data representation methods. This leads to the achievement of the needed technical result, i.e., reducing the load on the communication channels because of excluding the additional traffic that is created by sending the installation packets and updated versions of the client programs. The communication channels traffic being specific for the client-server systems in the thin client architecture is also excluded.

While the present invention has been described by means of the embodiments thereof, the scope of this invention is not limited by these examples, but is defined only by the claims taking into account the possible equivalents.

## Claims

1. An information system consisting of a server computer and one or more client computers connected with the server by a communication channel, wherein a modification and data retrieval operation being executed by the server computer, and the client computers executing requests to the server for the data modification and retrieval and provide the advanced graphical user interface, **characterized in** using, at each client computer, an extendable universal system of dynamically created self-sufficient objects.

2. The information system according to claim 1, **characterized in** using, as the basic protocol, the network protocol TCP/IP.

3. The information system according to claim 1, **characterized in** using, as the basic protocol, the network protocols HTTP and HTTPS.

4. The information system according to claim 1, **characterized in** using, as the basic protocol, the protocol SOAP over the network protocols HTTP and HTTPS.

5. The information system according to claim 1, **characterized in** supporting, at the server side, a session protocol with an authorization by a session identifier.

6. The information system according to claim 1, **characterized in** utilizing a user authentication by the digest authentication type.

7. The information system according to claim 1, **characterized in** utilizing a user authentication by the Kerberos protocol.

8. The information system according to claim 1, **characterized in** utilizing the caching mechanism for describing the self-sufficient objects.

9. The information system according to claim 1, **characterized in** utilizing a complete and/or partial encryption of requests and responses using session keys.

10. The information system according to claim 1, **characterized in** utilizing descriptions of the self-sufficient object transmitted via communication channels and cached at a client machine-readable medium in the encrypted form.

11. A method for providing an advanced, dynamically created graphical user interface at a client computer in a client-server information system, **characterized in** using an extendable system of self-sufficient objects operated according to a certain algorithm, i.e., a program object system functioning without using event handlers.
